# EUROPÄISCHE PATENTANMELDUNG

(11) **EP 2 859 870 A1**
(43) Veröffentlichungstag der Anmeldung: **15.04.2015**
(21) Anmeldenummer: 14001551.2
(22) Anmeldetag: 02.05.2014
(51) Int. Cl.: A61G 3/06, B60D 5/00, B61D 17/10, B61D 23/00, B62D 25/20, B62D 29/02, B62D 31/02

(54) **Tragendes Fahrzeugteil**

(30) Priorität: 20.09.2013 DE 202013008360 U
(71) Anmelder: Hübner GmbH & Co. KG, 34123 Kassel (DE)
(72) Erfinder: Ossendorff, Harald, 51789 Lindlar (DE); Busch, Thomas, 34359 Reinhardshagen (DE); Wiegrefe, Andreas, 36100 Petersberg (DE)
(74) Vertreter: Walther, Walther & Hinz GbR

(57) **Zusammenfassung**

Gegenstand der Erfindung ist ein tragendes Fahrzeugteil eines Fahrzeuges des Personentransports, wobei das Fahrzeugteil auf Bambusbasis hergestellt ist.

## Beschreibung

Die Erfindung betrifft ein tragendes Fahrzeugteil eines Fahrzeugs des Personentransports.

Tragende Fahrzeugteile eines Fahrzeuges des Personentransportes sind hinreichend bekannt. Bekannt ist insbesondere als tragendes Fahrzeugteil beispielsweise der Boden eines Busses oder eines Schienenfahrzeuges. Unter "tragend" wird hierbei verstanden, dass das Bauteil einer Belastung durch darauf stehende Personen standhalten kann. Insbesondere der Boden eines Busses wird bereits zurzeit aus Aluminium hergestellt, was in Bezug auf das Gewicht günstiger ist als Stahl, aber immer noch ein erhebliches Gewicht bedeutet.

Weitere tragende Fahrzeugteile eines Fahrzeugs des Personentransportes im Sinne der Erfindung sind beispielsweise bei einem Gelenkbus die Plattform, bei einem Schienenfahrzeug die Übergangsbrücke, die beispielsweise auch als Gliederbrücke ausgebildet sein kann, oder aber einzelne Brückenglieder, umfassend zwei Bodenbleche, auf denen eine Trittplatte aufliegt. Sowohl die Übergangsbrücke als auch die Brückenglieder, wie auch die Plattform eines solchen Fahrzeuges, sind aus Metall, insbesondere aus Aluminium ausgebildet.

Weitere tragende Teile eines Fahrzeugs im Sinne der Erfindung stellen Rampen als Zugangshilfen für Rollstühle dar, wobei solche Rampen ausklappbar oder ausfahrbar gestaltet sind. Derartige Rampen besitzen einen Rampenboden, der üblicherweise aus einer Metawell® Platte hergestellt ist, die seitlich durch ein Randprofil aus Kunststoff, Gummi oder PU eingefasst ist.

Die der Erfindung zugrunde liegende Aufgabe besteht demzufolge darin, ein tragendes Bauteil für ein Personentransportfahrzeug bereitzustellen, das preiswert in der Herstellung ist, unempfindlich gegenüber Feuchtigkeitseinwirkung, und darüber hinaus in der Lage ist, hohe Traglasten aufzunehmen und dies bei vergleichsweise geringem Gewicht.

Zur Lösung der Aufgabe wird erfindungsgemäß ein tragendes Fahrzeugteil eines Fahrzeugs des Personentransports vorgeschlagen, das auf Bambusbasis hergestellt ist. Bambus ist ein Gras, das äußerst widerstandsfähig ist, da es eine hohe Härte ähnlich der von Holz aufweist, aber im Gegensatz zu Holz aufgrund seiner Struktur unempfindlich gegenüber Feuchtigkeitseinfluss ist. Darüber hinaus geht mit der relativ großen Härte von Bambus auch eine hohe Tragfähigkeit einher. Insofern ist ein auf Bambusbasis hergestelltes Fahrzeugteil ebenfalls bei geringem Gewicht äußerst tragfähig, und dazu noch unempfindlich gegen Feuchtigkeitseinwirkung, sodass es tatsächlich für die Verwendung im Fahrzeugbau geeignet ist. Darüber hinaus weist Bambus ein hohes Maß an Brandschutzsicherheit auf. Bambus brennt nur sehr schwer, er glimmt lediglich, was maßgeblich für die Brandschutzsicherheit ist.

Vorteilhafte Merkmale und Ausgestaltungen der Erfindung ergeben sich aus den Unteransprüchen.

So ist insbesondere vorgesehen, dass das Fahrzeugteil als tragendes Teil als Platte ausgebildet ist. Insofern ist eine solche Platte als Bauteil beispielsweise als Boden eines Busses einsetzbar, als Plattform bei einem Gelenkfahrzeug oder auch als Teil einer Übergangsbrücke zwischen zwei gelenkig miteinander verbundenen Fahrzeugen eines Schienenfahrzeuges. Denkbar ist insbesondere auch der Einsatz einer solchen Platte auf Bambusbasis als Trittplatte einer Rampe als Zustiegshilfe in einen Bus oder ein Schienenfahrzeug, wobei die Platte mit einer Antirutschausrüstung versehen sein kann, z. B. mit einem Antirutschlack beschichtet sein kann, und vorzugsweise an allen vier Seiten durch ein Randprofil aus Kunststoff, Gummi oder PU eingefasst ist. Denkbar ist auch anstelle eines Antirutschlackes zur Aufrauung der Oberfläche eine Strukturierung der Oberfläche der Platte vorzusehen, beispielsweise durch Einbringen von flachen Nuten.

Es sind nun verschiedene Möglichkeiten der Herstellung einer solchen Platte aus Bambus denkbar.

Vorteilhaft kann vorgesehen sein, die Platte aus flach ausgerichteten miteinander verklebten Stäbchen auf Bambusbasis auszubilden. Zur Erhöhung der Tragfähigkeit bei einer solchen Platte kann ebenfalls vorgesehen sein, die Platte als erste Schicht aus flach ausgerichteten miteinander verklebten Stäbchen auf Bambusbasis mit mindestens einer zweiten Schicht auf Bambusbasis zu versehen. Hierbei verläuft ebenfalls die mindestens eine zweite Schicht winklig zur ersten Schicht, um einen stabilen Verbund bereitzustellen. Auch die zweite Schicht kann aus Stäbchen auf Bambusbasis ausgebildet sein, wobei die Stäbchen der ersten und der mindestens einen zweiten Schicht winklig, beispielsweise im Winkel von 90° zueinander verlaufen. Die Stäbchen beider Schichten sind hierbei flach ausgerichtet, d. h. die horizontale Erstreckung der Stäbchen, d. h. die Erstreckung parallel zur Plattenoberfläche ist größer, als die Erstreckung der Stäbchen im rechten Winkel dazu, also in vertikaler Richtung. Alternativ können die Stäbchen der ersten und mindestens einen zweiten Schicht auch im Verbund zueinander angeordnet sein, das heißt, einander überlappend miteinander verklebt sein. Weiterhin alternativ kann auch vorgesehen sein, als mindestens eine zweite Schicht eine Schicht aus Dielen vorzusehen, die mit der ersten Schicht aus flach ausgerichteten, horizontal verlaufenden Stäbchen verklebt wird. Dielen unterscheiden sich von Stäbchen dadurch, dass diese in Bezug auf die Oberfläche der Platte wesentlich breiter als hoch sind. Die Erfindung umfasst ebenfalls die Anordnung von drei und mehr Schichten übereinander, wobei die Schichten in gleicher Weise wie oben beschrieben ausgebildet und zu einer Platte miteinander verbunden sind.

Auch kann vorgesehen sein, die Platte aus hochkant miteinander verklebten Stäbchen auf Bambusbasis herzustellen. Unter "hochkant" ist zu verstehen, dass die Breite der Stäbchen in Richtung parallel zur Ober- oder Unterseite der Platte geringer ist, als die Höhe der Stäbchen. Zur Erhöhung der Tragfähigkeit kann in diesem Zusammenhang parallel zu der ersten Schicht aus hochkant miteinander verklebten Stäbchen mindestens eine zweite Schicht auf Bambusbasis angeordnet sein, wobei die Schichten ebenfalls miteinander verklebt sind. Die zweite Schicht, vorteilhaft ebenfalls aus Stäbchen auf Bambusbasis, verläuft winklig zu der ersten Schicht. Eine Möglichkeit zur Erhöhung der Tragfähigkeit besteht auch darin, die zweite Schicht ebenfalls aus hochkant ausgerichteten Stäbchen auf Bambusbasis auszubilden. Denkbar ist allerdings auch, die zweite Schicht auf Basis von Dielen mit der ersten Schicht aus hochkant verklebten Stäbchen auf Bambusbasis zu verkleben.

Als weitere Ausführungsform stellt sich eine Platte aus Dielen dar, wobei die Dielen miteinander verklebt sind. Vorteilhaft weist die Platte mindestens zwei Schichten aus Dielen auf, wobei die Schichten ebenfalls miteinander verklebt sind. Insbesondere kann in diesem Zusammenhang vorgesehen sein, die Dielen der mindestens zwei Schichten winklig, insbesondere im rechten Winkel zueinander verlaufen zu lassen.

Das Material selbst zur Herstellung der Stäbchen oder Dielen kann aus einem gepressten Bambus hergestellt sein. Das heißt, dass das Bambusrohr entsprechend in Stäbchen oder Dielenform zersägt wird, um gegebenenfalls anschließend in einer Form im Autoklaven seine endgültige Form unter Druck und Wärmezufuhr zu erhalten. Solchermaßen gepresster Bambus hat aufgrund der hohen Dichte sehr gute Brandschutzeigenschaften und genügt den Anforderungen nach DIN 5510-2. Alternativ oder zusätzlich kann der Bambus in Stäbchen- oder Dielenform bei der Herstellung entsprechender Platten unter Zugabe von Klebstoff, gepresst werden. Hierbei findet einerseits das Pressen der Stäbchen und Dielen als solche statt und andererseits das Pressen der Stäbchen und Dielen zu einer Platte. Sowohl das Pressen der Stäbchen und Dielen an sich, als auch das Pressen der Stäbchen und Dielen bei der Herstellung der Platte fallen unter die Erfindung. Wesentlich ist allein, dass der Bambus durch Pressen verdichtet wird, was die Brandschutzsicherheit erhöht. Eine solche Platte weist ebenfalls eine erhöhte Brandschutzsicherheit auf; dies unter der Voraussetzung, dass der Klebstoff selbst nicht oder nur schwer brennbar ist.

Anhand der Zeichnungen wird die Erfindung nachstehend beispielhaft näher erläutert.
- Fig. 1: zeigt einen Aufbau einer Platte mit zwei oder drei aus Stäbchen oder Dielen ausgebildeten Schichten, wobei die Stäbchen oder Dielen der Schichten kreuzweise zueinander verlaufen,
- Fig. 2: zeigt eine Platte mit einem zweischichtigen Aufbau, wobei Stäbchen oder Dielen gleich ausgerichtet im Verbund zueinander miteinander verbunden sind;
- Fig. 3: zeigt eine dreilagige Variante einer Platte mit in der mittigen Schicht hochkant angeordneten Stäbchen;
- Fig. 4: zeigt eine dreilagige Variante, bei der drei Schichten von Stäbchen oder Dielen jeweils im Verbund zueinander verlaufen.

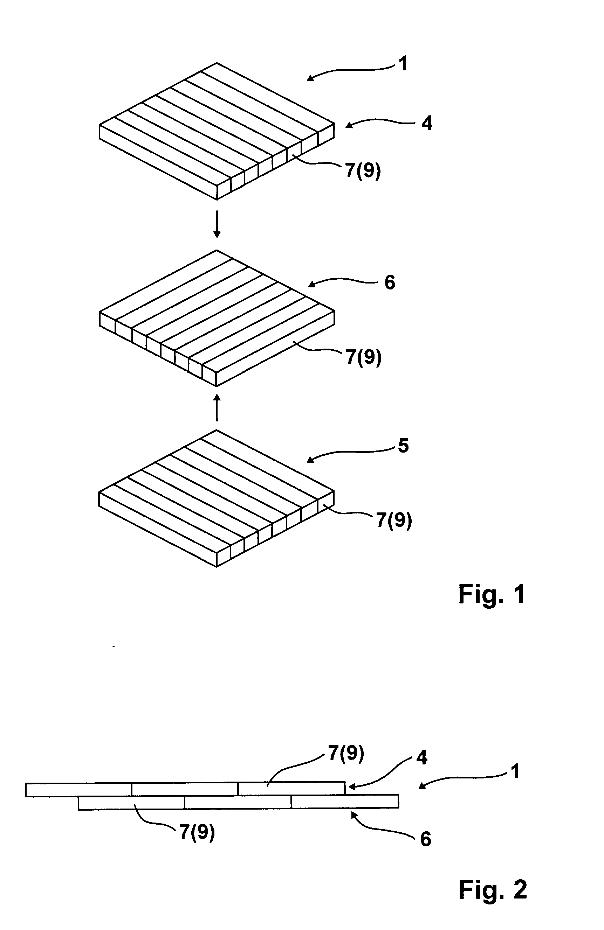

Bei der Ausführungsform gemäß Fig. 1 sind Stäbchen 7 oder Dielen 9 zur Bildung einer ersten Schicht 4 für eine Verbundplatte 1 vorgesehen, wobei die zweite Schicht 6 ebenfalls aus Dielen 9 der Stäbchen 7 besteht, wobei die Dielen 9 oder Stäbchen 7 mit der zweiten Schicht 6 im Winkel von 90° zu den Dielen 9 oder Stäbchen 7 der ersten Schicht 4 verlaufen. Wahlweise kann eine dritte Schicht 5 vorgesehen sein, die gleich der oberen Schicht ausgebildet ist und insofern zu einem dreilagigen Aufbau führt. Auch hier gilt, dass die einzelnen Schichten 4, 5 und 6 miteinander verklebt sind, aber auch die Dielen oder Stäbchen einer Platte untereinander.

Bei der Ausführungsform einer Platte 1 gemäß Fig. 2 sind zwei Schichten 4, 6 mit horizontal oder flach ausgerichteten im Querschnitt rechteckigen Stäbchen 7 oder Dielen 9 vorgesehen, die im Verbund zueinander verlaufen, wobei die Schichten 4, 6 untereinander verklebt sind, aber auch die Stäbchen oder Dielen der einzelnen Schichten 4 und 6. Auch hier ist eine dreischichtige Variante denkbar.

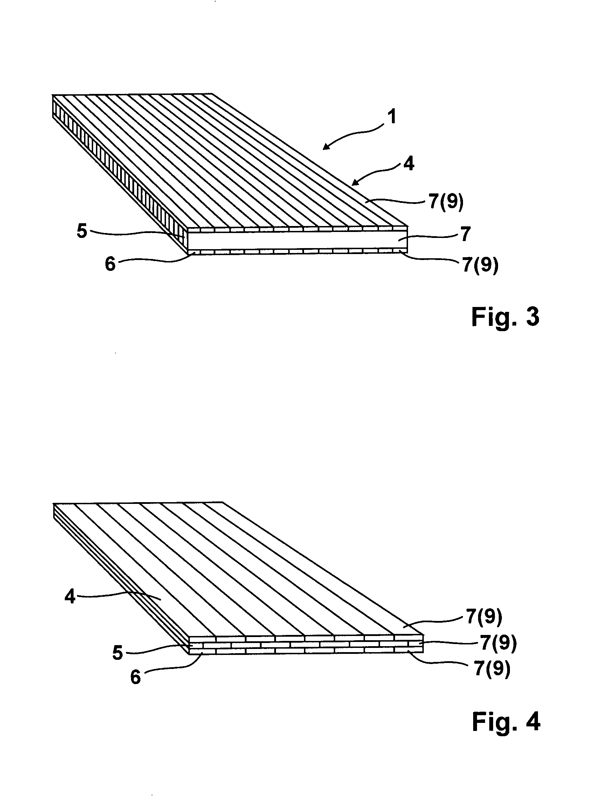

Fig. 3 zeigt eine dreischichtige Variante einer Platte, wobei zwischen zwei Schichten 4, 6 aus horizontal angeordneten oder ausgerichteten Stäbchen 7 vertikal verlaufende Stäbchen 7 vorgesehen sind. Die einzelnen Stäbchen oder Dielen sind hierbei jeweils ebenso miteinander verklebt, wie die einzelnen Schichten 4, 5, 6 miteinander verklebt sind.

Fig. 4 zeigt eine dreischichtige Variante, wobei die einzelnen Stäbchen 7 oder Dielen 9 der einzelnen Schichten 4, 5, 6 jeweils im Verbund zueinander angeordnet sind.

Zur Definition der Begriffe "hochkant" und "flach" ausgerichtete Stäbchen oder Dielen, wird darauf hingewiesen, dass bei hochkant ausgerichteten Stäbchen oder Dielen die horizontale Erstreckung der einzelnen Stäbchen oder Dielen parallel zur Oberseite der Platte geringer ist, als die vertikale Erstreckung, die Stäbchen oder Dielen in dieser Anordnung also höher als breit sind. Bei flach ausgerichteten Stäbchen oder Dielen ist es umgekehrt; hier ist die horizontale Erstreckung parallel zur Oberseite der Platte der einzelnen Dielen oder Stäbchen größer als die vertikale Erstreckung.

### Bezugszeichenliste:

- 1: Platte
- 4: Schicht
- 5: Schicht
- 6: Schicht
- 7: Stäbchen
- 9: Dielen

## Patentansprüche

1. Tragendes Fahrzeugteil eines Fahrzeuges des Personentransports,
**dadurch gekennzeichnet,**
**dass** das Fahrzeugteil auf Bambusbasis hergestellt ist.

2. Tragendes Fahrzeugteil nach Anspruch 1,
**dadurch gekennzeichnet,**
**dass** das Fahrzeugteil nach Art einer Platte (1) hergestellt ist.

3. Tragendes Fahrzeugteil nach Anspruch 2,
**dadurch gekennzeichnet,**
**dass** die Platte (1) aus flach ausgerichteten miteinander verbundenen Stäbchen (7) auf Bambusbasis ausgebildet ist.

4. Tragendes Fahrzeugteil nach Anspruch 3,
**dadurch gekennzeichnet,**
**dass** die Platte (1) als erste Schicht (4) aus flach ausgerichtet miteinander verklebten Stäbchen (7) auf Bambusbasis, mindestens eine zweite Schicht (6) aufweist.

5. Tragendes Fahrzeugteil nach Anspruch 4,
**dadurch gekennzeichnet,**
**dass** die mindestens eine zweite Schicht (6) aus Stäbchen (7) auf Bambusbasis winklig zur ersten Schicht (4) verläuft.

6. Tragendes Fahrzeugteil nach Anspruch 4 oder 5,
**dadurch gekennzeichnet,**
**dass** die Stäbchen (7) der mindestens einen zweiten Schicht (6) flach ausgerichtet sind.

7. Tragendes Fahrzeugteil nach Anspruch 4 bis 6,
**dadurch gekennzeichnet,**
**dass** die mindestens zwei Schichten (4, 6) miteinander verklebt sind.

8. Tragendes Fahrzeugteil nach Anspruch 4,
**dadurch gekennzeichnet,**
**dass** die mindestens eine zweite Schicht (6) aus Dielen (9) ausgebildet ist.

9. Tragendes Fahrzeugteil nach Anspruch 2,
**dadurch gekennzeichnet,**
**dass** die Platte (1) auf Bambusbasis aus miteinander verklebten Dielen hergestellt ist.

10. Tragendes Fahrzeugteil nach Anspruch 9,
**dadurch gekennzeichnet,**
**dass** die Platte (1) mindestens zwei Schichten (4, 6) aus Dielen (9) auf Bambusbasis aufweist, wobei die Schichten (4, 6) miteinander verklebt sind.

11. Tragendes Fahrzeugteil nach Anspruch 10,
**dadurch gekennzeichnet,**
**dass** die Dielen (9) der mindestens zwei Schichten (4, 6) winklig zueinander verlaufen.

12. Tragendes Fahrzeugteil nach einem der voranstehenden Ansprüche,
**dadurch gekennzeichnet,**
**dass** das Fahrzeugteil der Boden eines Fahrzeugs, z. B. eines Busses, die Rollstuhlrampe eines Fahrzeugs, z. B. eines Busses oder eines Schienenfahrzeugs, die Übergangsbrücke eines Gelenkfahrzeuges, z. B. eines Schienenfahrzeuges, die Brückenglieder eines Übergangs eines Gelenkfahrzeuges, z. B. eines Schienenfahrzeuges, oder die Plattform eines Gelenkfahrzeuges, z. B. eines Gelenkbusses, ist.

13. Tragendes Fahrzeugteil nach einem der Ansprüche 2 bis 12,
**dadurch gekennzeichnet,**
**dass** die Platte (1) eine Antirutschausrüstung, insbesondere einen Antirutschlack aufweist.

14. Tragendes Fahrzeugteil nach Anspruch 12,
**dadurch gekennzeichnet,**
**dass** die Rollstuhlrampe eines Fahrzeugs eine Platte (1) aufweist, die auf zumindest drei vorzugsweise vier Seiten durch ein Randprofil eingefasst ist.

15. Tragendes Fahrzeugteil nach Anspruch 14,
**dadurch gekennzeichnet,**
**dass** das Randprofil aus Kunststoff, Gummi oder Polyurethan hergestellt ist.

16. Tragendes Fahrzeugteil nach einem der Ansprüche 3 bis 15,
**dadurch gekennzeichnet,**
**dass** die Stäbchen (7) oder Dielen (9) aus gepresstem Bambus hergestellt sind.
